# EUROPEAN PATENT SPECIFICATION

(11) **EP 4 076 737 B1**
(45) Date of publication and mention of the grant of the patent: **16.07.2025**
(21) Application number: 20828129.5
(22) Date of filing: 15.12.2020
(51) Int. Cl.: B01J 23/89, B01J 23/96, B01J 37/00, C11C 3/12, B01J 35/45

(54) **CATALYST CONSISTING OF GRAPHENE-SUPPORTED NANOPARTICLES FOR SELECTIVE OIL HYDROGENATION AIMED AT THE PRODUCTION OF CIS-OLEIC ACID AND THE REDUCTION OF TRANS-OLEIC ACID**
KATALYSATOR, DER AUS GRAPHEN-GETRÄGERTEN NANOPARTIKELN BESTEHT, FÜR DIE SELEKTIVE ÖLHYDRIERUNG, DIE AUF DIE PRODUKTION VON CIS-ÖLSÄURE UND DIE REDUKTION VON TRANS-ÖLSÄURE ABZIELT
CATALYSEUR CONSTITUÉ DE NANOPARTICULES SUPPORTÉES PAR DU GRAPHÈNE POUR L'HYDROGÉNATION SÉLECTIVE DE L'HUILE VISANT LA PRODUCTION D'ACIDE CIS-OLÉIQUE ET LA RÉDUCTION DE L'ACIDE TRANS-OLÉIQUE

(30) Priority: 16.12.2019 IT 201900024111
(43) Date of publication of application: 26.10.2022
(73) Proprietor: NEXTCHEM TECH S.p.A., 00156 Rome (IT)
(72) Inventor: SARNO, Maria, 84081 Baronissi (SA) (IT); ZARLI, Antonio, 00144 Rome (IT); CIAMBELLI, Paolo, 80132 Napoli (NA) (IT); IULIANO, Mariagrazia, 84069 Roccadaspide (SA) (IT); VISCUSI, Gianluca, 84133 Salerno (SA) (IT)
(74) Representative: Sarpi, Maurizio
(86) International application number: PCT/IB2020/061966
(87) International publication number: WO 2021/124102

(56) References cited:
- WO-A1-2019/126316
- KR-B1- 101 951 191
- US-A1- 2016 279 619

## Description

### Summary of the Invention

The present invention belongs to the field of the production of carboxylic acids adapted to produce bio-lubricants or biodegradable plastics for producing copolymers.

More specifically, the invention relates to a new catalyst and a process for the synthesis thereof in a single phase: said catalyst is capable of operating under moderate pressure and temperature conditions and is usable in the hydrogenation processes of vegetable oils such as, for example, soybean, rapeseed, sunflower, canola, jatropha, camelina, carinata oil and, more generally, all oils with a high iodine number, and has both a high activity and a very high selectivity for the *cis* configuration of 9-octadecenoic acid (cis-oleic acid).

According to the invention, said catalyst is characterized in that it consists of an active phase consisting of nickel, palladium and ruthenium, dispersed on a support consisting of a thin layer of graphene, the dimensions of which are between 1 nanometer and a maximum value of 1 micron, preferably between 1 nanometer and 10 nanometers.

The external surface of the same catalyst is further covered with surfactant chains, such as linoleic acid, stearic acid, lauric acid or thiols which contribute to increasing the selectivity thereof.

A further advantageous feature of the catalyst according to the invention is that it allows several cycles of reuse without showing a significant loss of catalytic activity or deactivation.

### Field of the invention

Vegetable oil hydrogenation is a crucial industrial process for increasing oxidative stability and for obtaining products which have desired properties and various related applications.

The hydrogenation process can transform polyunsaturated acids into saturated acids; however, partial hydrogenation is highly desirable for several applications.

In addition, the selectivity towards monounsaturated isomers and isomers with cis configuration is of particular interest for many applications; for example in the biodiesel production sector for obtaining high crystallization points, and for better cold properties; in the food sector due to the fact that trans isomers can have negative effects, such as on the cholesterol present in the blood which is related to the percentage of saturated fatty acids and trans fatty acids present in the diet; in the field of coatings where it is highly desirable to have high contents of cis isomers of oleic acids.

### Background art

The fatty acid hydrogenation process has more than 100 years of history and is characterized by various instabilities due not only to economic factors, but also to practical factors such as, for example, process efficiency and product quality.

Catalysts for vegetable oil hydrogenation are known, the formulations of which have been developed to obtain an ever better conversion under various pressure and temperature conditions. These formulations must be understood as a percentage of active phase with respect to the support or any amount of dopants of the catalyst, i.e., other elements inserted to increase certain features thereof.

Several works have contributed to the development of increasingly efficient catalysts from the point of view of conversion, or of the operating range, or from the point of view of residence times; however, in all the studies carried out, an improvement in one aspect is always obtained, often at the expense of some other factor.

Supported nickel (Ni) is the typical commercial catalyst for this process, generally preferred to more noble metals due to the low cost thereof. Cobalt (Co) and copper (Cu) based catalysts are suitable for the selective hydrogenation of oils; on the other hand, colloids of noble metals such as platinum (Pt), palladium (Pd) and rhodium (Rh) allow increasing the activity of the catalyst at low temperatures.

As already mentioned, the selective hydrogenation of oils, especially if aimed towards certain isomeric configurations, is of great importance.

The formation of said isomers is linked to the addition of the hydrogen atom to the double carbon bonds by means of the known formation mechanism of Horiuti-Polanyi. According to this mechanism, in a first step, during the gradual addition of hydrogen, one atom thereof, adsorbed on the catalyst, reacts with a double bond of the triglyceride chain, which is also adsorbed, forming an intermediate. This intermediate can be further reduced by adding a second hydrogen atom, otherwise it will lose the hydrogen atom before desorption; it is in this step that the cis or trans configuration is determined.

From what can be deduced from the literature, noble metals have a greater activity and selectivity towards the formation of monounsaturated isomers, respectively in the order: rhodium (Rh), palladium (Pd), platinum (Pt), ruthenium (Ru) and nickel (Ni). On the other hand, these metals have the intrinsic tendency to favor the formation of fatty acids in trans configuration (or TFAs, trans fatty acids), respectively in the order: rhodium, palladium, ruthenium, nickel and platinum.

The process parameters can also influence the selectivity and activity, for example a greater selectivity will be obtained at a low partial pressure of hydrogen, with moderate stirring and a high temperature.

Finally, the peculiarities of each catalyst influence the final product of said process.

In the context of traditional heterogeneous catalysis, many studies have been carried out, varying the composition and support of the active phase; however, despite the efforts, the results are still far from the preset objectives.

In fact, in all these studies a general increase of the catalyst activity expressed in terms of conversion of oil into carboxylic acids can be found.

This increase is often due to the presence of palladium, in any case constituting the active phase of the catalyst, alone or in combination with other noble metals; however, by examining the reaction products, an increase in selectivity towards one isomeric configuration with respect to another is not detectable, as the selectivity is highly influenced by the presence of other elements and/or by the support used.

In none of the studies taken into consideration was a general increase in conversion and an increase in selectivity simultaneously found, in particular towards the *cis* configuration of 9-octadecenoic acid (cis-oleic acid) .

### Task of the invention

It is the task of the invention to identify a new catalyst, which is usable in processes of vegetable oil hydrogenation for producing bio-lubricants or biodegradable plastics for producing copolymers, which is synthesized in a single phase and which allows carrying out said hydrogenation process in a pressure range between 1 and 30 barg and a temperature between 80 and 220°C, having both a high activity and a very high selectivity for the *cis* configuration of 9-octadecenoic acid (cis-oleic acid).

### Suggested solution

The suggested catalyst is defined in claim 1.

The use of graphene allows increasing the general efficiency utilizing the absorbent properties of this material, and the specific properties of each constituent used in the invention are enhanced by the combination of the various effects: graphene stabilizes and pre-concentrates the oils which must be transformed; nickel is active in hydrogenation processes and the combined use thereof with palladium increases the activity thereof; ruthenium improves the isomerization step, which is necessary for obtaining the desired *cis* configuration; finally, the surfactant chains, which cover the surface of the catalyst, act by improving the selectivity of the catalyst itself.

US 2016 /279619 A1 can be considered the closest prior art. This document discloses monodispersed NiPd alloy nanoparticles assembled on graphene. The resulting particles are used in the tandem reactions (dehydrogenation of ammonia borane and hydrogenation of R-NO2 and/or R-CN).The process for making these supported nanoparticles includes the use of oleylamine as surfactant. The obtained catalyst is efficient and re-usable. However the nanoparticles do not comprise ruthenium, and the dimensions of the graphene support are not disclosed.

WO 2019/126316 A1 disclosed NiPd nanoparticles supported on nitrogen doped graphene. These particles are used in the hydrodehalogenation of polyhalogenated aromatics. No mention is made of presence of ruthenium.

KR 101 951 191 B1 discloses ruthenium nanoparticles supported on graphene. This catalyst is used in the dehydrogenation of a biomass derived compound. However there is no motivation for the skilled person to modify the catalyst according US 2016 /279619 A1 by including ruthenium in order to solve the technical problem of how to selectively hydrogenate tri-glicerides and enrich the oils in monounsatured cis-isomers, in view of the fact that until now no particular effect has been ascribed to the dimension of the graphene support.

Further characteristics and advantages of the invention will become clear from the following description with reference to the attached drawing tables. The objects of the present invention are achieved by means of the appended set of claims.

### Brief description of the drawings.

Figure 1 shows the experimental apparatus used for the tests on the hydrogenation process.

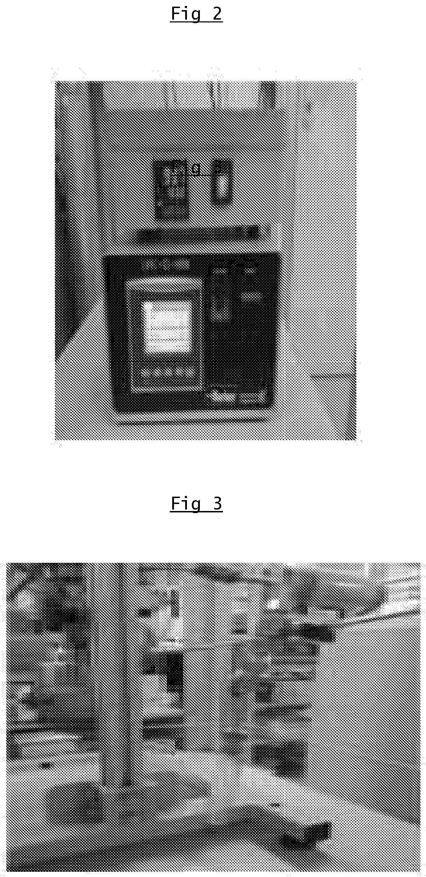

- Figure 2 shows the temperature, pressure and mixing speed control system.
- Figure 3 shows the set-up sampling system.
- Figure 4 shows a diagrammatic depiction of the whole apparatus;
- Figure 5 shows the EXD spectrography of the nanocatalyst consisting of Ni/Pd;
- Figure 6 shows the spectrum obtained by the X-ray diffractometry (XRD) of a nanocatalyst consisting of Ni/Pd;
- Figure 7 shows the diagram obtained for the thermal analysis (TG-DTG) of a nanocatalyst consisting of Ni/Pd.
- Figure 8 shows the EXD spectrography of a nanocatalyst consisting of Ni/Pd dispersed on graphene;
- Figure 9 shows the spectrum obtained by the X-ray diffractometry (XRD) of a nanocatalyst consisting of Ni/Pd dispersed on graphene;
- Figure 10 is the diagram obtained for the thermal analysis (TG-DTG) of a nanocatalyst consisting of Ni/Pd dispersed on graphene;
- Figure 11 is the diagram obtained by Raman spectroscopy for a nanocatalyst consisting of Ni/Pd dispersed on graphene.
- Figure 12 shows the EXD spectrography of the nanocatalyst consisting of Ni/Pd/Ru dispersed on graphene;
- Figure 13 is the spectrum obtained by the X-ray diffractometry (XRD) of the nanocatalyst consisting of Ni/Pd/Ru dispersed on graphene;
- Figure 14 is the diagram obtained for the thermal analysis (TG-DTG) of the nanocatalyst consisting of Ni/Pd/Ru dispersed on graphene;
- Figure 15 is the diagram obtained from Raman spectroscopy for the nanocatalyst consisting of Ni/Pd/Ru dispersed on graphene.
- Figure 16 shows the diagram related to the yield of the rapeseed oil hydrogenation reaction as a function of the reaction time for a catalyst consisting of Ni/Pd (5:1 Ni/Pd percentage by weight), at 100°C, 10 bar, 500 rpm and with a catalyst amount of 1% wt/wt;
- Figure 17 shows a diagram related to the interaction between catalyst/triglyceride.
- Figure 18 is the diagram related to the yield of the rapeseed oil hydrogenation reaction as a function of the reaction time for a catalyst consisting of Ni/Pd dispersed on graphene (5:1:10 Ni/Pd/G percentage by weight), at 100°C, 10 bar, 500 rpm and with a catalyst amount of 1% wt/wt;
- Figure 19 is the diagram related to the yield of the rapeseed oil hydrogenation reaction as a function of the reaction time for a catalyst consisting of graphene only, at 100°C, 10 bar, 500 rpm and with a catalyst amount of 1% wt/wt.
- Figure 20 is the diagram related to the yield of the rapeseed oil hydrogenation reaction as a function of the reaction time for a catalyst consisting of Ni/Pd dispersed on graphene (5:1:10 Ni/Pd/G percentage by weight), at 70°C, 10 bar, 500 rpm and with a catalyst amount of 1% wt/wt;
- Figure 21 is the diagram related to the yield of the rapeseed oil hydrogenation reaction as a function of the reaction time for a catalyst consisting of Ni/Pd dispersed on graphene (5:1:10 Ni/Pd/G percentage by weight), at 130°C, 10 bar, 500 rpm and with a catalyst amount of 1% wt/wt;
- Figure 22 is the diagram related to the yield of the rapeseed oil hydrogenation reaction as a function of the reaction time for a catalyst consisting of Ni/Pd dispersed on graphene (5:1:10 Ni/Pd/G percentage by weight), at 170°C, 10 bar, 500 rpm and with a catalyst amount of 1% wt/wt.
- Figure 23 shows the diagram related to the yield of the rapeseed oil hydrogenation reaction as a function of the reaction time for a catalyst consisting of Ni/Pd dispersed on graphene (5:1:10 Ni/Pd/G percentage by weight), at 100°C, 10 bar, 500 rpm and with a catalyst amount of 3% wt/wt.
- Figure 24 shows the diagram related to the yield of the rapeseed oil hydrogenation reaction as a function of the reaction time for the catalyst consisting of Ni/Pd/Ru dispersed on graphene (5:1:1:10 Ni/Pd/Ru/G percentage by weight), at 100°C, 10 bar, 500 rpm and with a catalyst amount of 1% wt/wt.
- Figure 25 shows the comparison in terms of yield for different families of catalysts consisting of Ni/Pd, Ni/Ru, Pd/Ru (1:1 Ni/Pd, Ni/Ru, Pd/Ru percentage by weight) at 100°C, 10 bar, 500 rpm, with a catalyst amount of 1% wt/wt and for a reaction time of 360 min.
- Figure 26 shows a diagram related to the yield expressed as a percentage by weight of C18:1 as a function of the time for different cycles of use of the nanocatalyst consisting of Ni/Pd/Ru dispersed on graphene (5:1:1:10 Ni/Pd/Ru/G), at 100°C, 10 bar, 500 rpm and with a catalyst amount of 1% wt/wt.
- Figure 27 shows the effect of cleaning between cycles expressed in terms of yield for the rapeseed oil hydrogenation process as a function of the reaction time for the catalyst consisting of Ni/Pd/Ru dispersed on graphene (5:1:1:10 Ni/Pd/Ru/G percentage by weight), at 100°C, 10 bar, 500 rpm and with a catalyst amount of 1% wt/wt.
- Figure 28 shows the rapeseed oil spectrum.
- Figure 29 shows the spectrography of nanoparticles from Ni/Pd.
- Figure 30 shows the spectrography of nanoparticles from Ni/Pd dispersed on graphene.
- Figure 31 shows the spectrography of the nanoparticles from Ni/Pd/Ru dispersed on graphene.

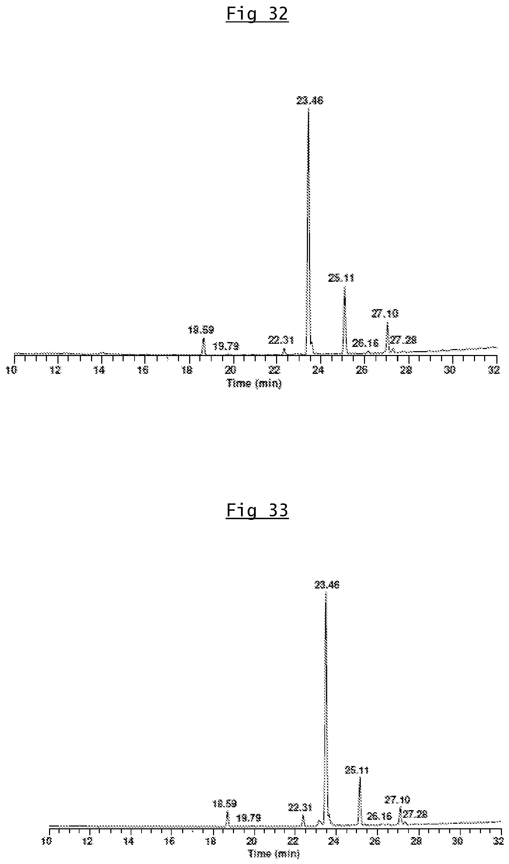

- Figure 32 shows the spectrum of hydrogenated rapeseed oil with Ni/Pd nanocatalyst after 60 min.
- Figure 33 shows the spectrum of hydrogenated rapeseed oil with Ni/Pd nanocatalyst after 120 min.

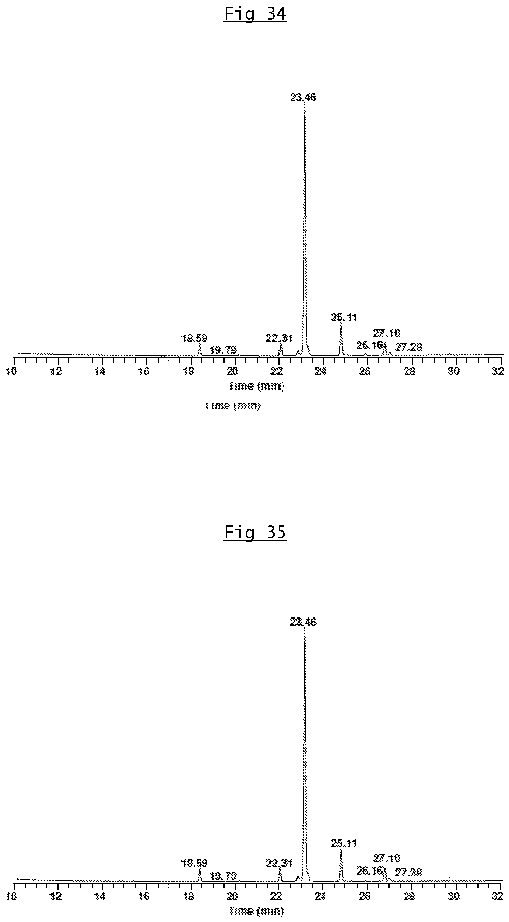

- Figure 34 shows the spectrum of hydrogenated rapeseed oil with Ni/Pd nanocatalyst after 180 min.
- Figure 35 shows the spectrum of hydrogenated rapeseed oil with Ni/Pd nanocatalyst dispersed on graphene after 60 min.

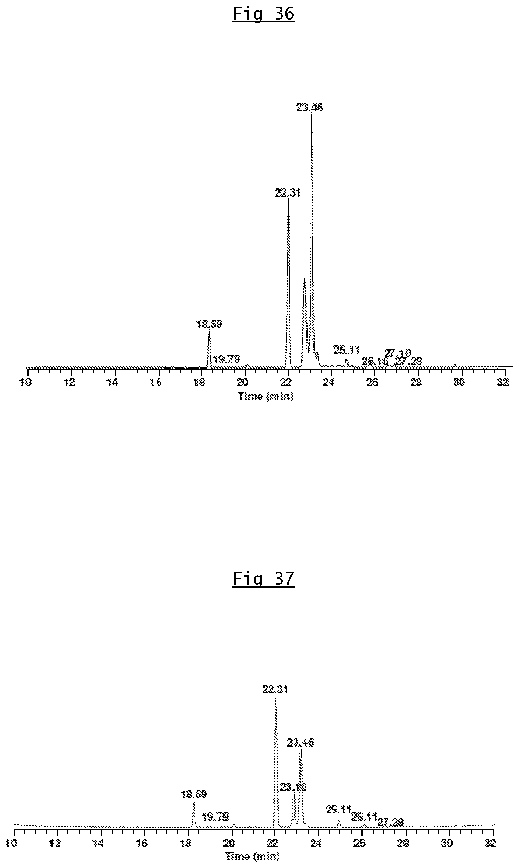

- Figure 36 shows the spectrum of hydrogenated rapeseed oil with Ni/Pd nanocatalyst dispersed on graphene after 300 min.
- Figure 37 shows the spectrum of hydrogenated rapeseed oil with Ru/Pd nanocatalyst after 360 min.

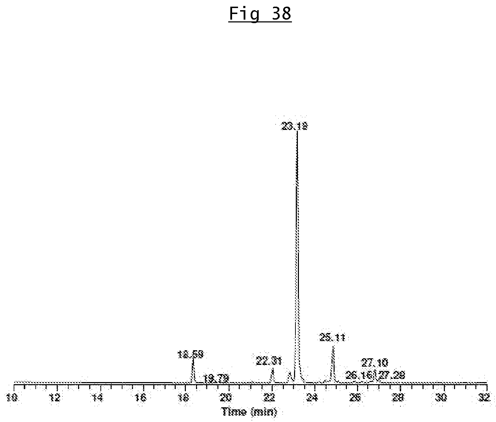

- Figure 38 shows the spectrum of hydrogenated rapeseed oil with Ni/Pd/Ru nanocatalyst dispersed on graphene after 60 min.

### Detailed description of the invention

Vegetable oils generally consist of triglycerides of fatty acids with several carbon atoms (up to 22 atoms) and with up to 3 double bonds.

During the addition of hydrogen to the fatty acid chain, the double bonds present can react to form *cis* or *trans* configurations; therefore, an essential aspect is the possibility to direct the hydrogenation/isomerization process towards the *cis* configuration.

In this sense, nanotechnologies, as well as the possibility to obtain catalyst structures with specific compositions and morphologies, offer the possibility to overcome the limitations of the prior art, allowing the development of catalysts which have a high selectivity towards monounsaturated isomers and which substantially allow a directing of the isomerization process towards a desired product.

For this purpose, a catalyst has been developed which can be dispersed in the reaction reagents and easily separated from the products by filtration, for example with leaf filters, "Cricket" filters, press filters or even membrane press filters; this separation operation does not affect the invention which therefore can be reused in the subsequent hydrogenation batch.

In particular, the invention is a catalyst adapted to function under moderate pressure and temperature conditions between 1 barg and 30 barg and between 80 and 220°C, respectively, preferably operating at 10 barg and 100°C, which has a high conversion and which is completely selective towards the *cis* configuration of 9-octadecenoic acid.

The high activity was achieved by using an active phase of nickel, which is the typical commercial choice for these applications, in combination with palladium.

Ruthenium was advantageously added to this basic formulation.

Said active phase was dispersed on a support consisting of thin layers of graphene with a size between 1 nanometer and at most 1 micron, preferably between 1 nanometer and 10 nanometers, in order to increase the efficiency of the catalyst by utilizing the adsorbing properties of this material.

The choice of this type of support also allows achieving other advantages, such as:
- Reducing the amount of active phase, which itself contains nickel and an already small amount of palladium and ruthenium;
- Stabilizing the catalyst, avoiding the aggregation of the nanoparticles and also putting them in electrical connection;
- Favoring separation, since graphene generally has larger dimensions than the active phase and this allows the use of larger mesh filters for the separation of the nanocatalyst from the reaction products;
- Pre-concentrating the reagents, **i.e.,** hydrogen and triglycerides, utilizing the adsorbing properties of graphene which allow contrasting the diffusion phenomena, thus allowing to always have available molecules to convert.

These nanoparticles of Ni/Pd/Ru dispersed on graphene, in a weight ratio Ni/(Pd+Ru) between 1% by weight and 5%, preferably about 2.5% by weight, allow obtaining the best results in terms of activity and selectivity.

The invention was summarized by providing the following steps:
- the formation of a precursor consisting of the active phase consisting of nickel, palladium, and ruthenium;
- the formation of an activated complex between said precursor and the surfactant molecules determined by the interaction of the metal ions with the polar head of the surfactant;
- the formation of micelles, in a non-polar medium, and progressive aggregation and growth of nanoparticles;
- the formation of nanoparticles, the surface of which is conjugated with the surfactant molecules;
- the dispersion of said nanoparticles on a support consisting of graphene.

This new nanocatalyst, obtained after said synthesis in one phase and the surfaces of which are covered by a surfactant, such as linoleic acid, stearic acid, lauric acid or even thiols, has been tested for the selective hydrogenation of canola oil, showing extraordinary performance.

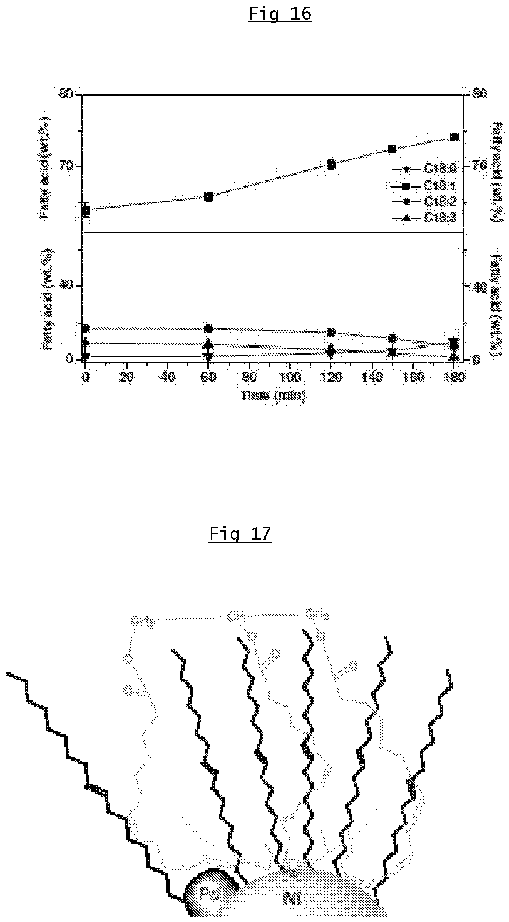

It has been found that the selective partial hydrogenation of unsaturates is conditioned not only by the composition and morphology of the catalyst, but also by the surfactants, which play a very important role as they induce steric hindrances which contribute to increasing the selectivity of the reaction, as shown in figure 17.

The results show that the hybrid nanocatalyst containing nanoparticles of nickel with small amounts of palladium and ruthenium, allows obtaining, during the hydrogenation of rapeseed oil, a favorable ratio of the cis isomer of oleic acid to stearic acid (cis-C18:1/C18:0), using a catalyst amount between 0.2% by weight and 10% by weight with respect to the amount of reagent oil, i.e., amount of catalyst/amount of incoming oil, preferably 1% by weight.

The addition of ruthenium in the active phase allows reaching successfully up to 75.3% by weight of cis-oleic acid *(cis* C18:1) after 60 minutes, with only 2.46% by weight of stearic acid (C18:0).

Furthermore, it should be noted that only 2.6% by weight of the cis isomer of the oleic acid produced (cis C18:1) consists of positional isomers.

In addition, the graphene nanoparticles ensure the stability of the catalyst during the use cycles.

The synthesis of the final nanocatalyst was obtained through successive tests, in which an element of the final structure was inserted in each test, in order to determine the best composition and the best conditions for synthesizing; thus the subsequent tests concerned:
- the preparation of a nanocatalyst consisting of nickel/palladium;
- the preparation of a nanocatalyst consisting of nickel/palladium on a graphene support;
- the preparation of a nanocatalyst consisting of nickel/palladium and ruthenium on a graphene support.

The synthesis of the nanocatalyst consisting of nickel/palladium (Ni/Pd) was carried out under nitrogen flow. For the synthesis, 20 mL of benzyl ether, 1.48 mmol of nickel (II) acetylacetonate, 0.16 mmol of palladium (II) acetate, 20 mmol of 1,2-hexadecanediol and 12 mmol of oleic acid were magnetically stirred, from room temperature up to 200°C for 120 min and then at a temperature of 285°C for 60 min. Washing was obtained by centrifugation (7500 rpm, 30 min) in ethanol and then in a mixture of equal volume of hexane and ethanol.

The active phase was then inserted, consisting of nickel/palladium as previously obtained, on a support consisting of graphene (Ni/Pd/G); this synthesis proceeded by magnetically stirring 20 mL of benzyl ether, 1.48 mmol of nickel (II) acetylacetonate, 0.16 mmol of palladium (II) acetate, 0.17 g of thin layers, with a maximum limit of 1 micron, of graphene (hereinafter G), 20 mmol of 1,2-hexadecanediol and 12 mmol of oleic acid from room temperature up to 200°C for 120 minutes and then at a temperature of 285°C for 60 minutes. After the synthesis, the product was centrifuged at 7500 rpm and for 30 minutes in ethanol, then in a mixture of equal volume of hexane and ethanol.

Lastly, the final nanocatalyst was synthesized, also inserting ruthenium in the active phase and dispersing said active phase on a support consisting of thin layers of graphene (Ni/Pd/Ru/G); for the synthesis 20 mL of benzyl ether, 1.48 mmol of nickel (II) acetylacetonate, 0.16 mmol of palladium (II) acetate, 0.16 mmol of ruthenium (III) acetylacetonate, 0.17 g of thin layers of graphene, with a maximum limit of 1 micron, 20 mmol of 1,2-hexadecanediol and 12 mmol of oleic acid were magnetically stirred from room temperature up to 200°C for 120 minutes and then at a temperature of 285°C for 60 minutes. The same procedure was followed as used in the previous preparations for washing.

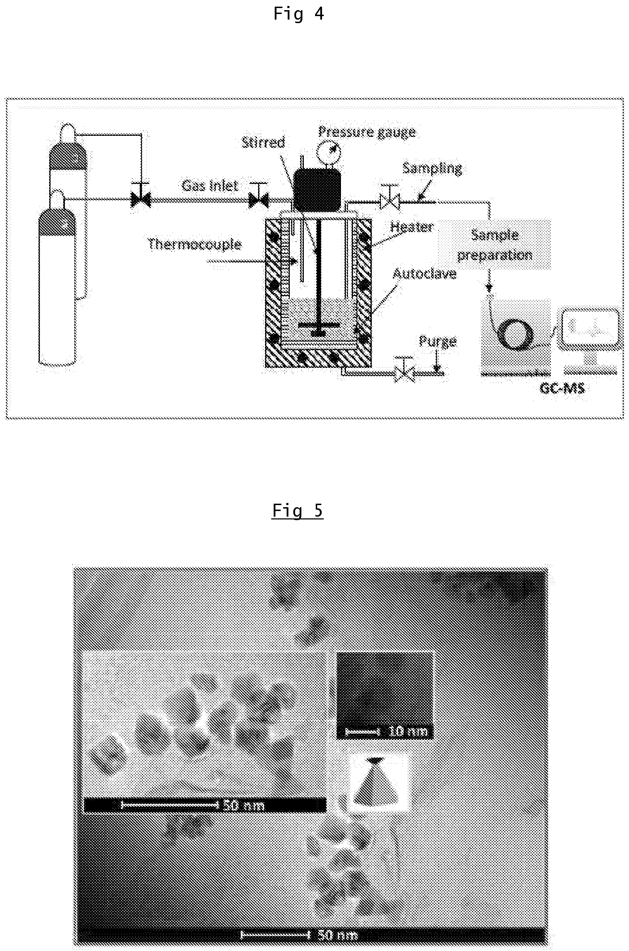

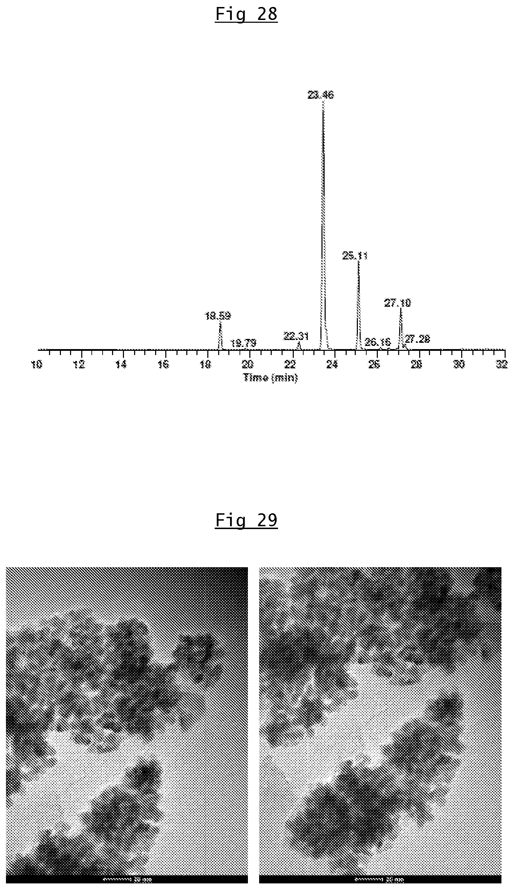

The morphology of the nanoparticles was determined by transmission electron microscope (TEM) analysis; the TEM images of the nickel/palladium (Ni/Pd) catalyst, shown in figures 5 and 29, show a narrow dimensional distribution with an average particle size of 10nm and a standard deviation of ± 3% (referred to the particle diameter); moreover said particles are arranged in a narrow triangle, with interparticle arrangement due to the OA covering.

In the high resolution TEM image shown in figure 5, it can be seen that each nickel/palladium nanoparticle consists of an illuminated part of an almost pyramidal shape, on which a smaller and darker part is positioned; a possible nickel/palladium morphology is shown as an insert in the same Figure 5.

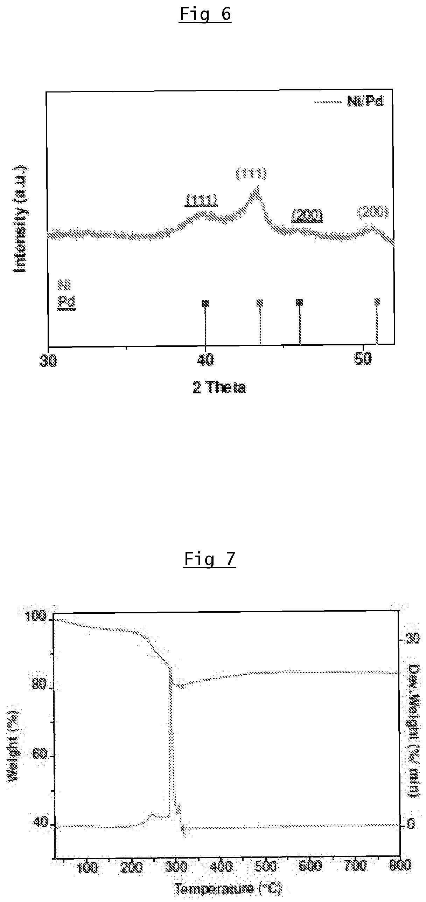

To confirm this structure of the nickel/palladium nanoparticles, an X-ray diffractometry of the powder was performed, shown in figure 6 where the resulting spectrum is shown and in which the typical peaks at 39.87° are visible (111), 46.24° (200) for palladium and 43.44° (111) and 50.70° (200) for nickel.

The characterization by thermogravimetric analysis (TG-DTG) of said synthesized nickel/palladium nanoparticles is shown in Figure 6.

As can be seen, the weight loss due to surfactants (OA) is slightly shifted towards higher temperatures compared to pure surfactants (OA), probably due to the bond with the nanoparticles. The amount of said surfactants introduced into the sample is approximately 15% by weight. After 300°C, the weight increase observed may be due to the formation of metal oxides.

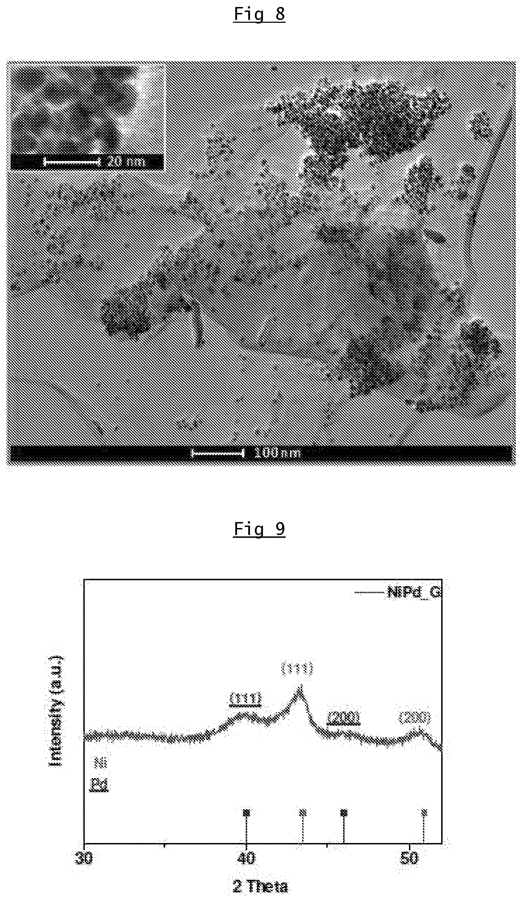

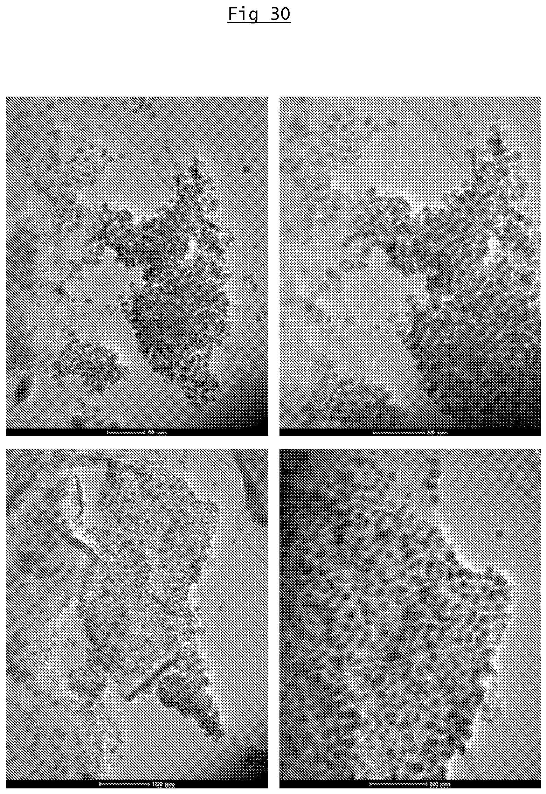

In the same way, the morphological and structural features of the nickel/palladium nanoparticles dispersed on graphene (Ni/Pd/G) were studied by means of transmission electron microscope analysis; the typical TEM image of the sample thus prepared is shown in Figure 8 and Figure 30; from the higher resolution TEM image shown in the insert of Figure 8, the small dark particles of palladium can be distinguished from the nickel particles which have a light color; furthermore, the edges of the particles are not smooth and have a cube-shaped structure at the periphery.

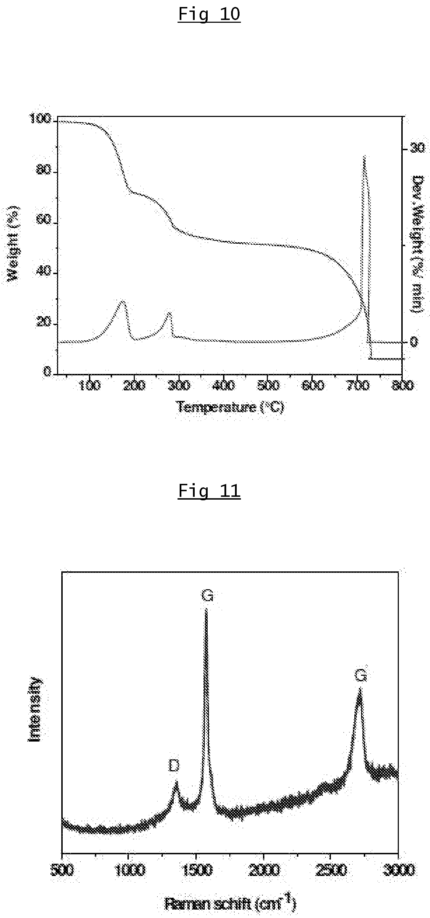

To confirm this structure of the nickel/palladium nanoparticles dispersed on graphene (Ni/Pd/G), an X-ray diffractometry of the powder shown in Figure 9 was carried out, in which the typical peaks of the palladium and nickel can be seen. The characterization by thermogravimetric analysis (TG-DTG) of said Ni/Pd nanoparticles on graphene is shown in figure 10; in this figure, after a marked weight loss due to water, the weight loss due to the surfactants and graphene can be seen. The amount of said surfactants introduced into the sample corresponds to about 20% by weight; it is worth noting the difficulty of quantifying graphene due to the oxidation of metals occurring simultaneously. The analysis by Raman spectroscopy of the nanocomposite formed by nickel/palladium dispersed on graphene shows two prominent peaks at 1353 cm⁻¹ and 1579 cm⁻¹, which correspond to band D and band G, respectively.

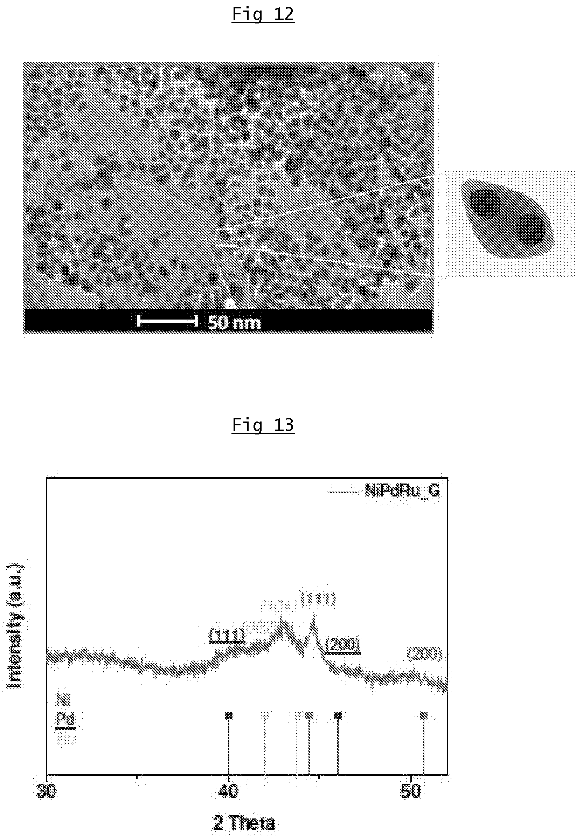

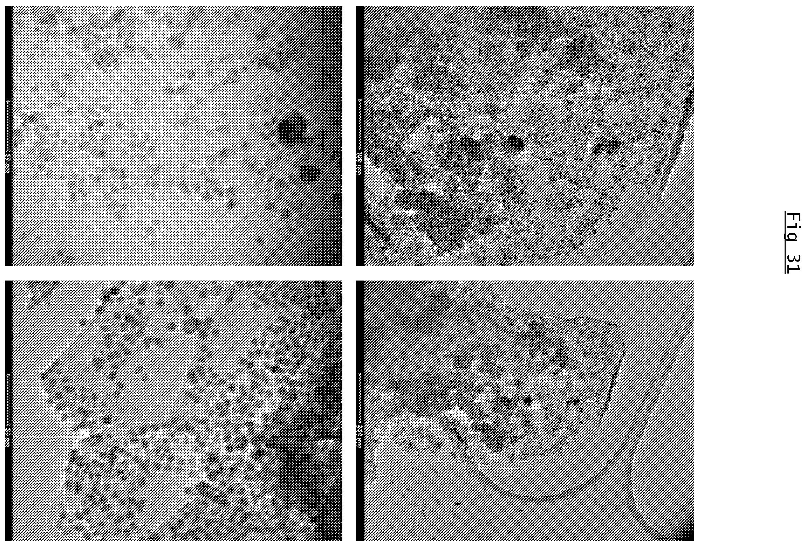

Finally, the morphological and structural features of the synthesized nanoparticles of nickel/palladium/ruthenium dispersed on graphene (Ni/Pd/Ru/G) were studied by means of transmission electron microscope analysis; the typical TEM image of the sample thus prepared is shown in Figure 12 and Figure 31. The nanoparticles of nickel/palladium/ruthenium appear to be well dispersed on graphene; the possible structure of the nanocatalyst is shown in the enlargement of Figure 12 where, in particular, two small dark nanoparticles of palladium and ruthenium are visible on the light part consisting of nickel.

The X-ray diffractometry of the powder of this nanocatalyst is shown in Figure 13, where the typical peaks of palladium and nickel can be seen, in addition to the typical peak at 41.8° (002) and 43° (101) of ruthenium.

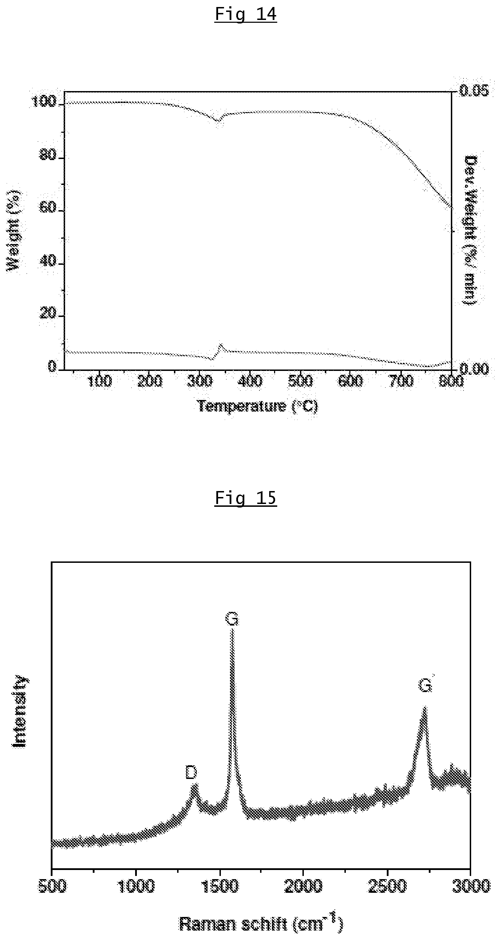

The profile deriving from the thermo-gravimetric analysis (TG-DTG) of said synthesized nanoparticles consisting of nickel/palladium/
ruthenium dispersed on graphene is shown in Fig. 14; in this case, this profile is dominated by metal oxidation phenomena which occur simultaneously with the oxidation and release of the organic/carbonaceous components. Finally, the analysis by Raman spectroscopy of the nanocomposite is shown in Figure 15, which shows a profile dominated by the prominent G peaks.

The elementary analyses for the nanocatalysts consisting of nickel/palladium, nickel/palladium dispersed on graphene and nickel/palladium/ruthenium dispersed on graphene were performed based on EDX spectroscopy, highlighting the presence of carbon, nickel, palladium, ruthenium and oxygen-containing species, as well as the absence of impurities in the sample. In particular, in the nickel/palladium catalysts and nickel/palladium catalysts dispersed on graphene, the atomic ratio for Ni/Pd is 5.15% by weight (Ni/Pd=9.16% mol), and 5.21% by weight (Ni/Pd=9.16% mol), respectively, in good accordance with the amount of precursors used in the syntheses.

As for the nanocatalyst nickel/palladium/ruthenium dispersed on graphene, the atomic ratio Ni/(Pd+Ru) is 2.48% by weight, also suggesting a successful reduction of the precursors.

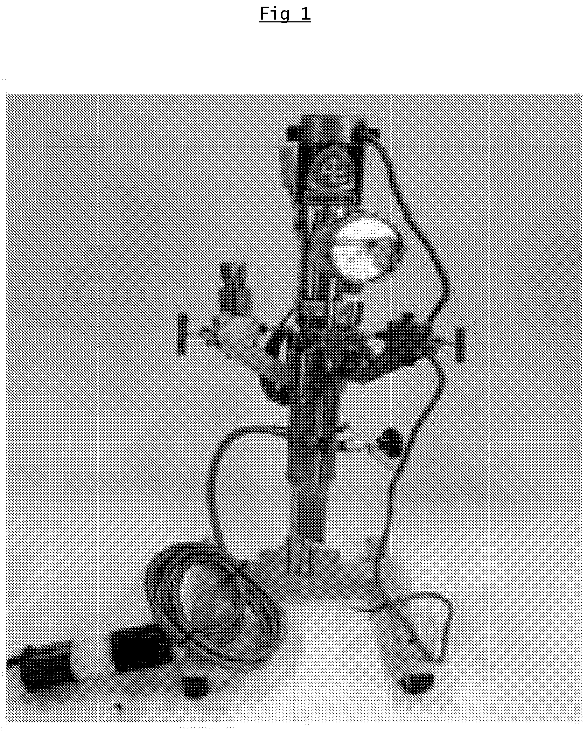

The different catalysts were then tested for partial hydrogenation of canola oil in the experimental setup shown in Figure **1****.**

The reactions were carried out in a 150 ml Parr model pressure reactor, provided with a pressure transducer and thermocouples for monitoring the reaction pressure and temperature, the images of which are shown in Figure **1****.**

The test was performed by loading into the reactor 20 g of canola oil and catalyst at a concentration of 1% (g of nanocatalyst/g of oil).

A characterization of canola oil in terms of physical-chemical properties is given in the table below.

| **Property** | | **Value** | |
|---|---|---|---|
| Acid value | mgKOH/g | 2.7 ± 0.03 | |
| Free fatty acid content | % | 1.4 ± 0.04 | |
| Moisture | % | 0.03 ± 0.02 | |
| Saponification Index | mgKOH/g | 256 ± 0.04 | |
| Iodine value | gI₂/100g oil | 162 ± 0.02 | |

| **Fatty Acids Composition** | | **Retention Time (min)** | **wt (%)** |
|---|---|---|---|
| Palmitic acid | | 18.59 | 4.9 ± 1.20 |
| Palmitoleic acid | | 19.79 | 0.3 ± 0.55 |
| Stearic acid | | 22.31 | 1.7 ± 0.90 |
| Oleic acid | | 23.46 | 64.11 ± 0.90 |
| Linoleic acid | | 25.11 | 16.92 ± 1.10 |
| Eicosanoic acid | | 26.16 | 0.88 ± 1.40 |
| Linolenic acid | | 27.10 | 8.71 ± 0.70 |
| Cis 11-eicosanoic acid | | 27.28 | 1.6 ± 0.80 |
| other | | - | 0.88 ± 1.25 |

Before the introduction of hydrogen (H₂) in the system, the dissolved air and the residual air present in the reactor were removed, creating a vacuum therein.

A vacuum exhaust line was used for venting.

Atmospheric pressure was then re-established by introducing nitrogen (N₂).

For safety reasons, this procedure was performed twice, allowing the reactor to operate in the absence of oxygen (O₂).

At this point the hydrogen was introduced into the reactor, maintaining the pressure at 10 bar for the entire duration of the reaction.

The system temperature was gradually increased and maintained at certain values set by an external controller, while at the same time keeping the system stirring with a speed of 500 rpm; this stirring rate is adequate to minimize the restrictions on mass transfer in the gas-liquid and liquid-solid phases.

The reaction was interrupted at specific and regular intervals, starting from an initial instant (time zero) corresponding to the achievement of the temperature 100°C inside the reactor; the oil samples were collected at regular intervals and analyzed in order to determine the composition of the fatty acids.

Said composition was determined by gas chromatography - mass spectrometry: the reaction products were converted into the fatty acid methyl esters thereof (FAME) and analyzed by GC-MS (Thermo Fischer Scientific) using a TG-Polar capillary column (0.25 µm × 0.25 mm × 60 m) at 120°C for 1 minute, then increasing to 170°C with a rate of 6.5°C/min and finally increasing up to 260°C with a rate of 2.8°C/min and allowing the system to remain under such conditions for 9 minutes. The injector and detector temperatures were set to 200°C and 250°C, respectively, and helium was used as the carrier gas.

As for the catalyst reuse cycles, the studies were conducted at 10 bar (pressure maintained by introducing H₂), at 100°C and for a reaction duration of 3 hours. At the end of the hydrogenation, the stirring was stopped, and the oil was collected using a glass syringe under a nitrogen flow. The reactor was then refilled using a regenerated catalyst and pressurized with H₂ at 10 bar. This process was repeated several times.

All the tests carried out were duplicated to estimate the reproducibility of the results obtained from the hydrogenation process.

For this purpose, a new batch of catalysts was used for each duplicate test.

In particular, the results of the experimental tests performed with the nickel/palladium nanocatalyst are shown in Figure 16 and Table 1; it can be noted that in the first 180 minutes with a catalyst amount of 1% by weight, at 100°C, 10 bar and mixing speed of 500 rpm, said Ni/Pd catalyst allows selectively increasing the amount of cis-9-octadecenoic acid (C18:1) up to 74.1% by weight. Simultaneously, the amounts of C18:2 and C18:3 decrease, saturating with stearic acid (C18:0).

It can be seen that no trans C18:1 isomer is formed during the entire test.

It is reasonable to think that the exceptional performance of this catalyst is related to the features of the inorganic active phase and the modification of the catalyst surface induced by the surfactant chains.

In particular, the selectivity towards the cis isomer of C18:1 is mainly due to steric hindrances induced by the surface functionalization of the surfactants, which allows accessing the active surface of specific double bonds and prevents total hydrogenation, as shown in the diagram in Figure 17.

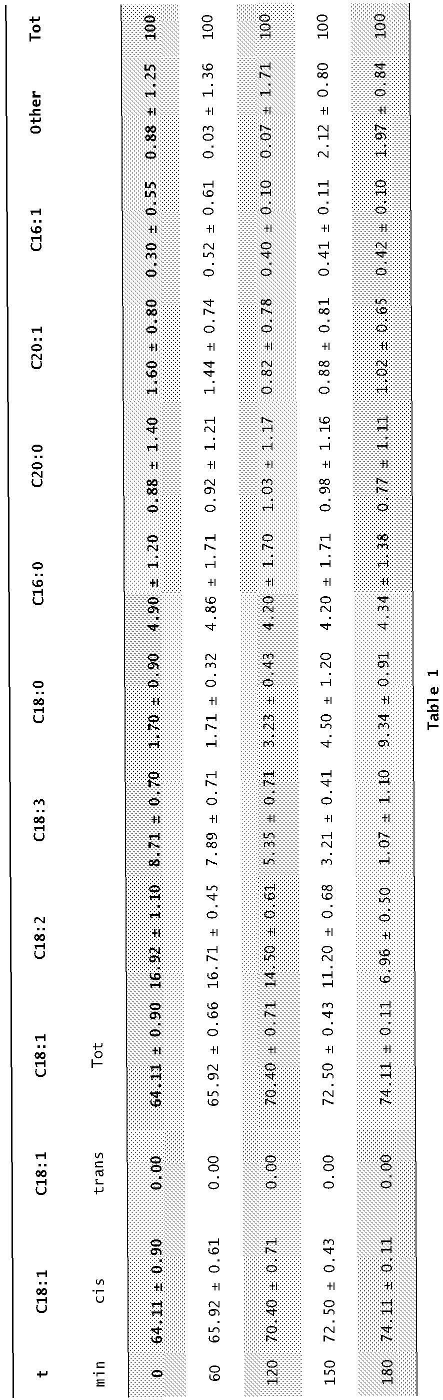

Furthermore, the higher activity of the nickel/palladium catalyst suggests a key role of Pd in improving the same activity, compared to a catalyst the active phase of which consists of nickel only, which shows only 68% by weight of cis C18:1 after 180 minutes under the same operating conditions.

This is due not only to the additional sites exposed on the smaller, higher-activity palladium particles, but also to the heterogenization between the two metals.

In fact, due to the slightly different working functions thereof, the electrons flow from the nickel to the palladium, probably causing a positively charged nickel surface, thus improving the affinity for the adsorption of molecules with double bonds, i.e., the interaction for example with molecules containing delocalizedπ electrons.

On the other hand, as seen in Figure 16, after 180 minutes the stearic acid content is 9.34% by weight; this indicates the presence of a small number of non-selective sites, which are probably found mainly on palladium, more negatively charged and therefore less covered by oleic acid chains.

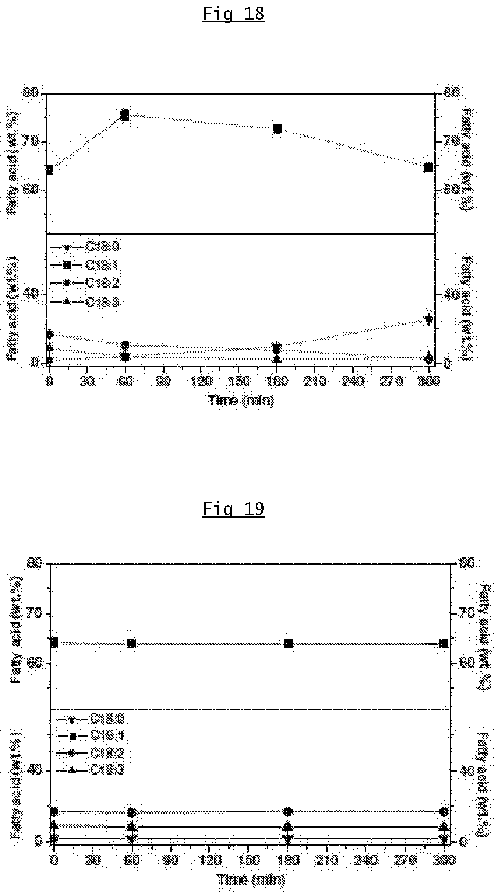

Using the nanocatalyst consisting of nickel/palladium dispersed on graphene, under the same operating conditions, the amount of cis-9-octadecenoic acid is 75.64% by weight, after only 60 minutes; this indicates faster kinetics for this catalyst, as shown in Figure 18 and Table 2.
This more active catalyst also results in a better C18:1/C18:0 ratio; in fact, after 1 h, a lower formation of C18:0 is observed, the decrease of which is approximately equal to the greater amount of cis C18:1 formed, in particular when compared with the case of use of the nanocatalyst consisting of nickel and palladium.
However, after 1 hour, a decrease in selectivity with respect to the C18:1 product is observed due to the deactivation of the catalyst, probably due to the damage of the selective active sites by different species containing poisons.

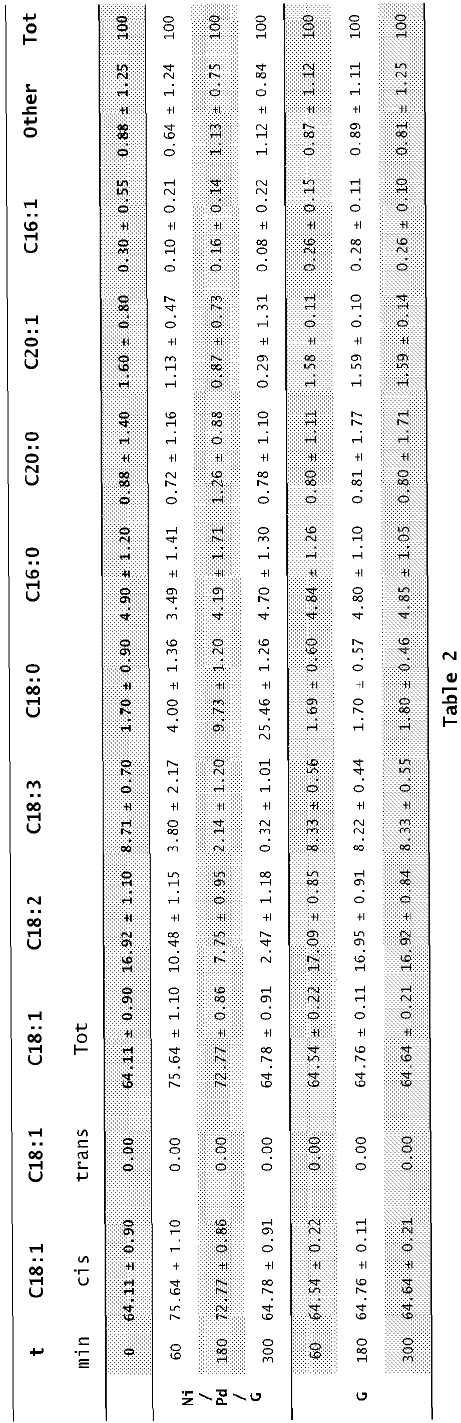

With increasing time, there is also a marked trend towards total hydrogenation, with the formation of significant amounts of fully hydrogenated stearic acid.

Figure 19 shows the results of a similar test performed with only graphene as catalyst; from the comparison between Figure 18 and Figure 19 the absence of catalytic activity on the graphene layers alone is apparent, suggesting that in the catalyst consisting of nickel/palladium dispersed on graphene, the latter acts as a sort of adsorbent and pre-concentrating material, contrasting the diffusion phenomena and increasing the kinetics.

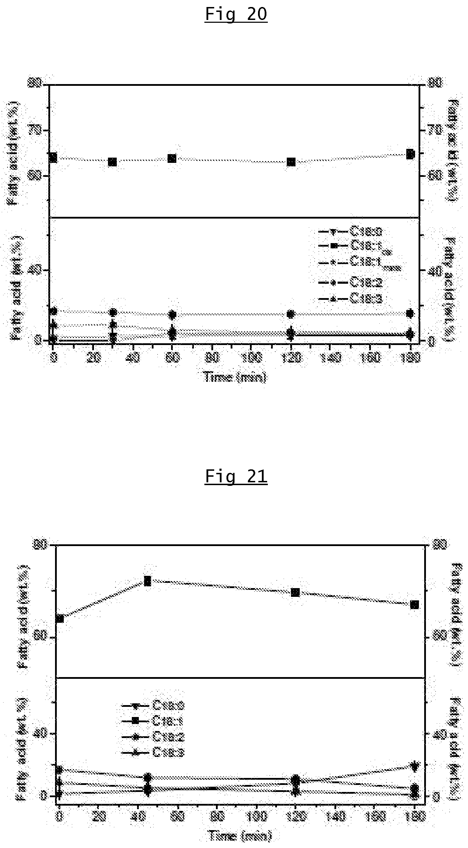

The effect of temperature is described in the graphs of Figures 20, 21 and 22 and Table 3; in particular, an increase in kinetics is observed by increasing the temperature. In fact, at 170°C the concentration is 71.39% by weight after 30 minutes; on the other hand, at this high temperature, for longer reaction times the content of cis-9-octadecanoic acid decreases, while simultaneously, the amounts of C18:2 and C18:3 increase, due to the overall increase in reactions and the formation of trans-elaidic acid.

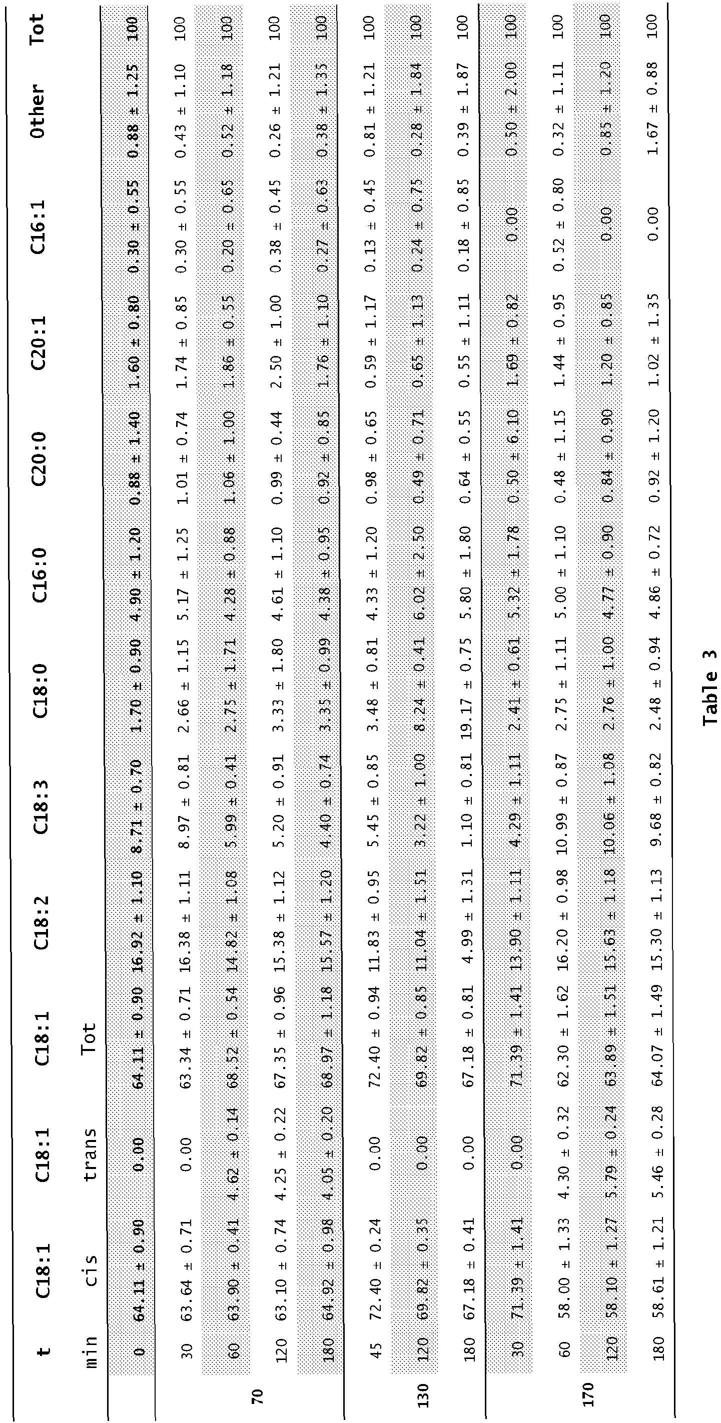

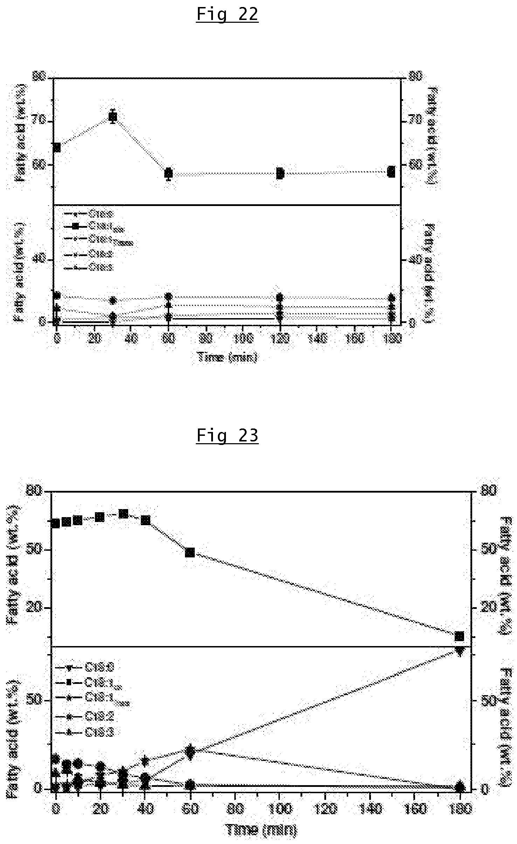

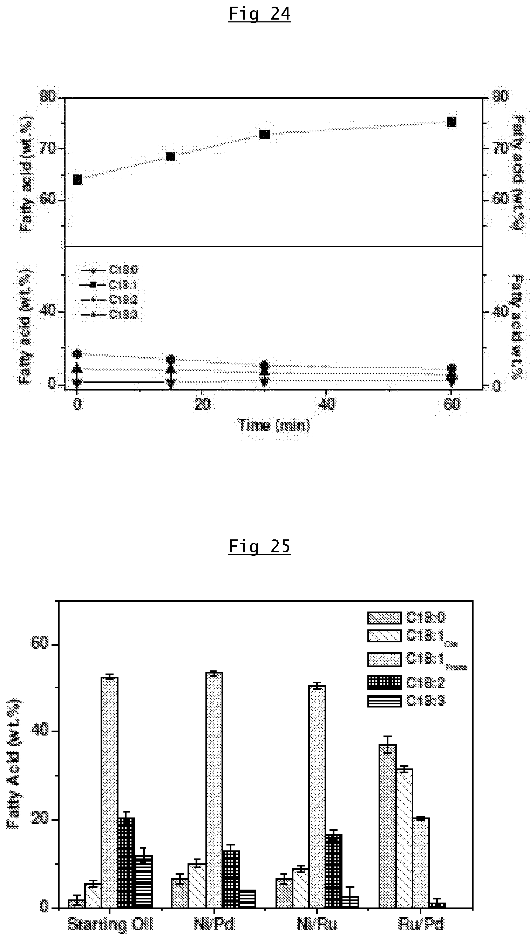

For this purpose, a new series of tests was performed at 100°C and in the presence of 3% by weight of catalyst consisting of nickel/palladium on graphene, the results of which are shown in Figure 23 and Table 4, in order to monitor the role of the amount of catalyst in the reaction. The experiments show that the hydrogenation conditions are excessively favored, as they are determined by the greater amount of catalyst, which has a greater number of active sites for the total reaction, and therefore discouraging the use of high amounts of catalyst.
Advantageously, the addition of ruthenium to the catalyst formulation allows obtaining a low formation of stearic acid, as shown in Figure 24 and in Table 5.

Furthermore, a further directing of the reaction towards the formation of cis C18:1 by ruthenium is detectable.

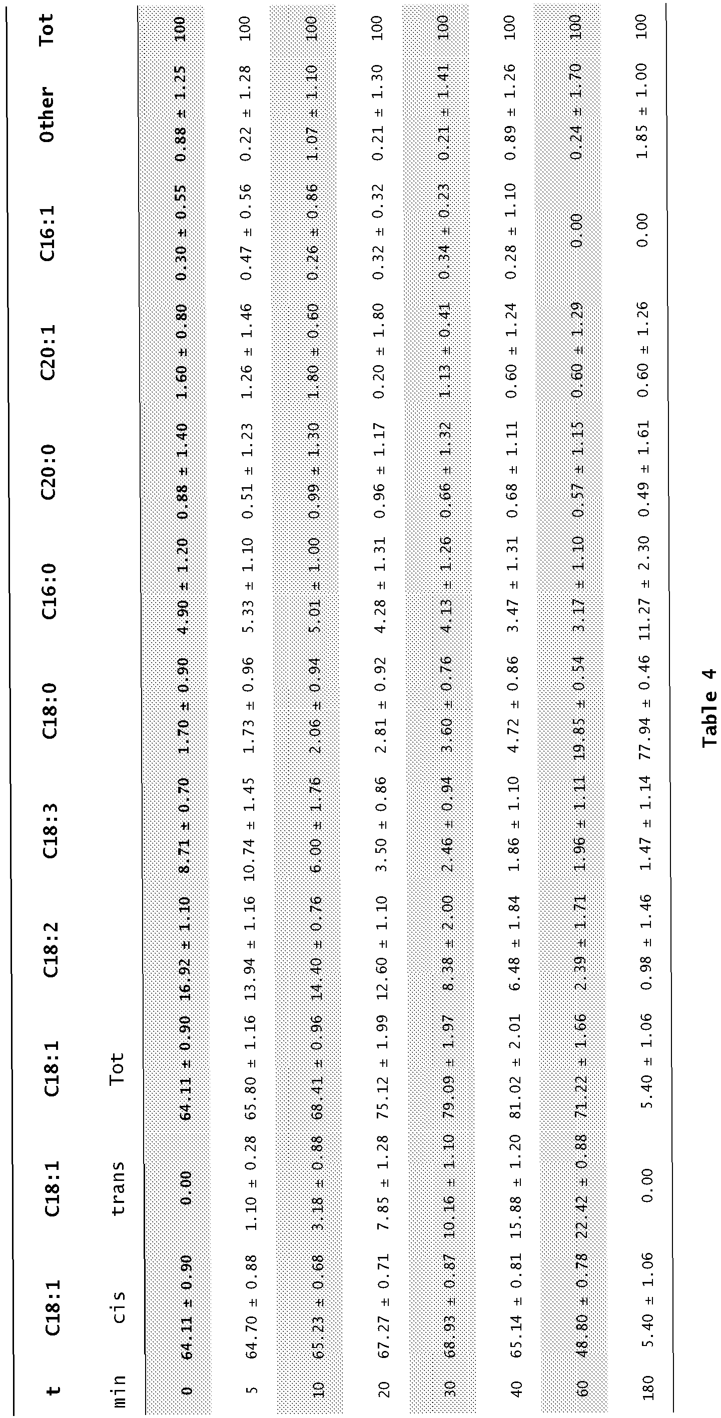

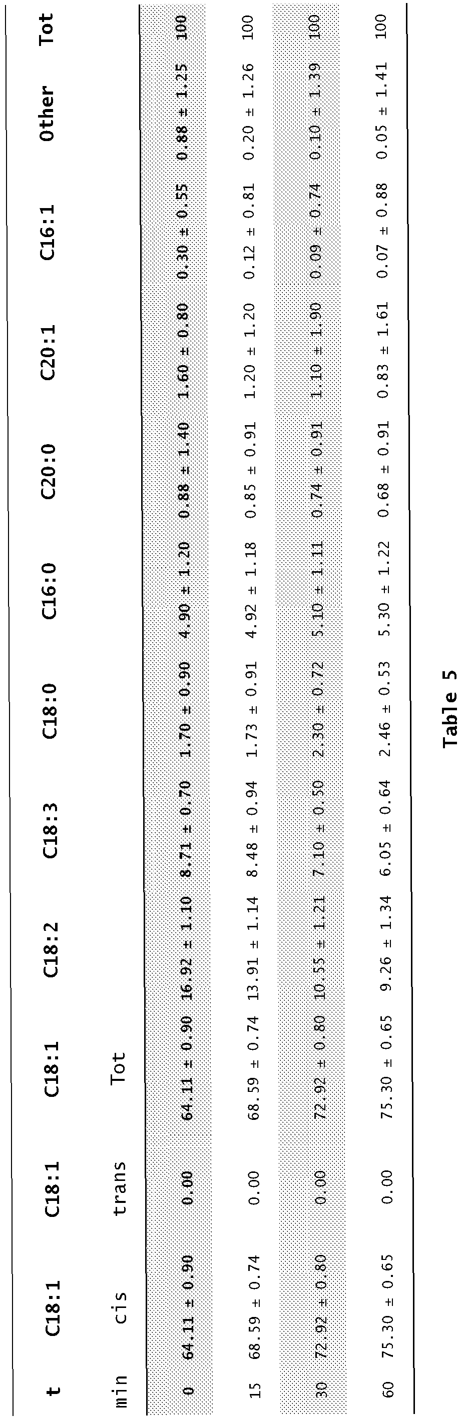

In order to demonstrate this aspect, further oil enriched with tests were carried out on a canola C18:1 and with catalysts consisting of nickel palladium, nickel/ruthenium and palladium/ruthenium, as reported in Figure 25 and in Table 6; these tests highlight the ability of ruthenium/palladium to direct the isomerization towards the cis form of C18:1.

The comparison between the three catalysts, consisting in this case of an equal amount of two different metals, shown in Figure 25, shows that the nanocatalyst consisting of ruthenium/palladium is the one most able to hydrogenate, producing on the other hand a high amount of stearic, and at the same time showing isomerization capacity. The nickel/palladium catalyst has a certain hydrogenating action, while the nickel/ruthenium catalyst appears to have a weak isomerizing action. These results suggest that ruthenium can be considered an isomerizing type and that the activity is strongly influenced by the heterojunction between the metals.

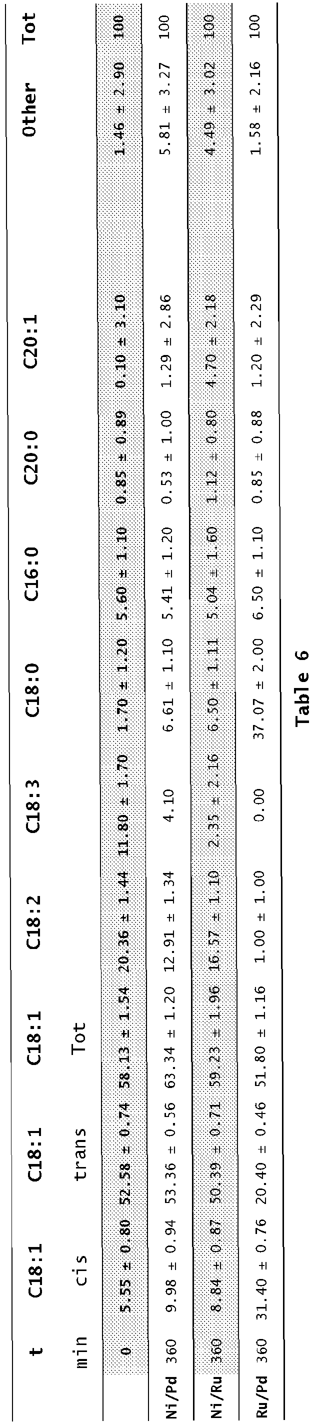

For example, for the Ru/Pd catalyst the strong difference in the working function between the two metals barely covered the Pd particles, which forms half of the catalyst surface and is a very active metal for hydrogenation, resulting in the production of high amounts of stearic acid.

The results show that by adding ruthenium to the active phase of the nickel/palladium catalyst on graphene, the formation of cis C18:1 after 60 minutes is 75.3% by weight, with only 2.46% by weight of stearic acid.

Furthermore, only 2.6% by weight of cis C18:1 consists of positional isomers, while using the nickel/palladium catalyst on graphene it was possible to obtain 5.6% by weight after 60 minutes. The amount of positional cis C18:1 isomer is another critical parameter, which is not typically explored, but is also very important for many applications.

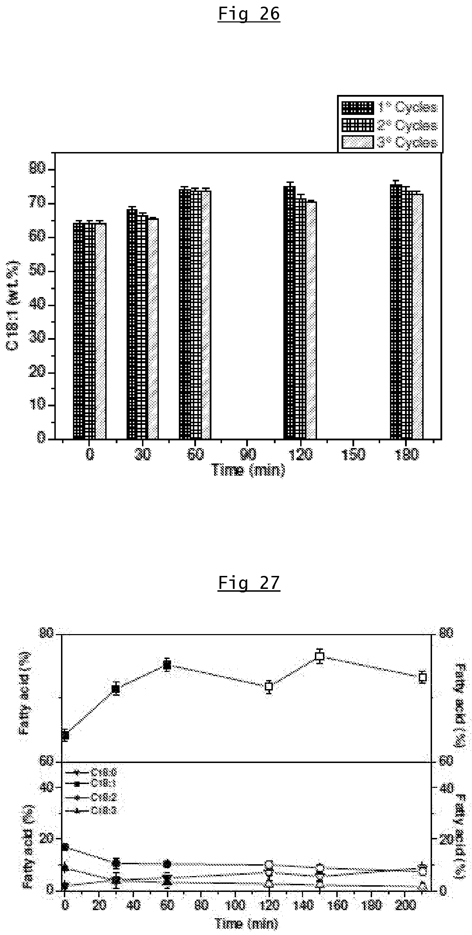

A further assessment was carried out, regarding an aspect of great importance in the field of industrial catalysts, namely the possibility to re-use the catalyst; the results, shown in Figure 26 and in Table 7, show that neither the second nor the third cycle of use cause a significant reduction in the catalytic activity.

It is reasonable to think that this stability effect exhibited during the cycles of use is mainly due to graphene, which stabilizes the nanoparticles, unlike commercial catalysts which consist of free particles and which generally have a high deactivation in subsequent cycles of use. An analysis was performed for three successive use cycles not supported by intermediate cleaning performed by washing in hexane by centrifugation, the results of which are shown in Figure 27, and which highlights the effect of washing in removing adsorbed poisoned species which block the active sites.

From the results obtained it can be concluded that the Ni/Pd nanoparticles have a narrow dimensional distribution, with an average particle size of 10 nm and a standard deviation of ±3% related to the diameter of the particles and are arranged in a narrow triangle, with interparticle arrangement due to the surfactant covering.

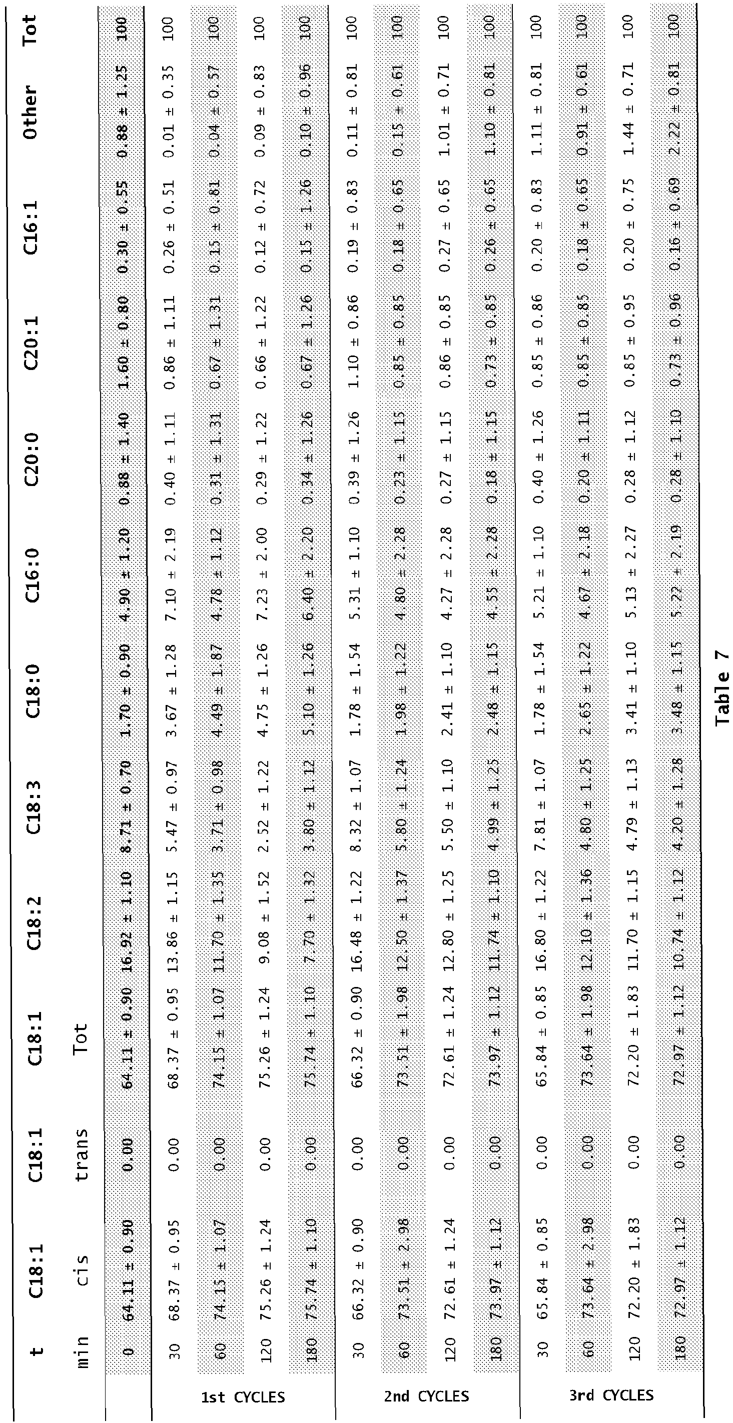

The Ni/Pd and Ni/Pd/Ru nanoparticles are well dispersed on graphene; in particular, the nanoparticles of Ni/Pd/Ru consist of two small dark particles of Pd and Ru arranged on light-colored Ni particles.

The elementary analyses carried out for the Ni/Pd, Ni/Pd catalysts dispersed on graphene and Ni/Pd/Ru dispersed on graphene by EDX spectroscopy highlight the presence of carbon, nickel, palladium, ruthenium, and oxygen species. There are no impurities in the sample. In particular, in the nickel/palladium catalysts and nickel/palladium catalysts dispersed on graphene, the atomic ratio for Ni/Pd is 5.15% by weight (Ni/Pd=9.16% mol), and 5.21% by weight (Ni/Pd=9.16% mol), respectively, in good agreement with the amount of precursors used in the syntheses.

As for the nanocatalyst nickel/palladium/ ruthenium dispersed on graphene, the atomic ratio Ni/(Pd+Ru) is about 2.5% by weight, precisely 2.48% by weight, also suggesting a successful reduction of the precursors.

The results demonstrate that a nano-hybrid catalyst consisting of nickel with a small amount of palladium and ruthenium covered with conjugated oleic acid chains can selectively hydrogenate triglycerides, enriching the oils in monounsaturated cis isomers.

The use of graphene as a support allows obtaining faster reaction kinetics, probably due to a preconcentration of the reagents, also allowing the use of a very small amount of catalyst and therefore, advantageously, reducing the amount of noble metals.

These features cause the catalytic process to be capable of obtaining a favorable cis-oleic acid/stearic acid (cis-C18:1/C18:0) ratio in a reasonable time.

The addition of ruthenium to the active phase allows a further directing of the reaction towards the production of cis isomers, or a further control on the reaction mechanism.

Finally, the stabilizing nanoparticles of graphene ensure the stability of the catalyst during the subsequent cycles of use.

## Claims

1. A nano-catalyst for processes of vegetable oil hydrogenation for producing bio-lubricants or biodegradable plastics for producing copolymers, **characterized in that it** is constituted by an active phase composed of nickel, palladium and ruthenium, dispersed on a support consisting of graphene layers with a thickness less than 1 micron, **wherein** the surfactant chains, that cover the outer surface of said active phase, cause steric hindrances thus promoting the selective triglycerides hydrogenation and the enrichment of oil in monounsatured cis-isomers, **wherein** the active phase has a Ni/(Pd+Ru) ratio between 1% by weight and 5% by weight, and **wherein** said surfactant chains are molecules of oleic acid, linoleic acid, stearic acid, lauric acid or thiols.

2. The nano-catalyst according to claim 1 **characterized in that** the thickness of said graphene layers is between 1 nanometer and less than 1 micron, preferably between 1 nanometer and 10 nanometers.

3. The nano-catalyst according to claim 1 **characterized in that** the active phase has a Ni/(Pd+Ru) ratio equal to 2.5% by weight, **wherein** the addition of palladium to nickel allows to increase the overall catalyst activity due both to the greater palladium activity and to the heterogenization between the two metals, and **wherein** the presence of ruthenium results in a further heterojunction between the metals, which allows to shift the transformation reaction towards the production of isomers with cis-configuration.

4. A catalytic process of vegetable oil hydrogenation for producing bio-lubricants or biodegradable plastics for producing copolymers **characterized in that** it is performed by using the nano-catalyst claimed in one or more of the preceding claims and **wherein** the final product consists of fat acids having a high percentage of *cis*-9-octadecenoic acid (cis-oleic acid), in order to reduce the formation of *trans* isomers of 9-octadecenoic acid (trans-oleic acid).

5. The catalytic process of vegetable oil hydrogenation for producing bio-lubricants or biodegradable plastics for producing copolymers according to claim 3 **wherein** said catalyst operates in a temperature range between 80°C and 220°C, preferably at 100°C,
in a pressure range between 1 barg and 30 barg, preferably at 10 barg.

6. A method for producing a nano-catalyst according to any one of claims 1 to 3, **characterized in that** it includes:
the formation of a precursor, said precursor consisting of nickel, palladium and ruthenium and thus corresponding to the active phase;
the formation of an activated complex between said precursor and the surfactant molecules, wherein said activated complex is determined by the interaction of the metal ions with the polar head of the surfactant, and wherein the surfactant molecules are selected between oleic acid, linoleic acid, stearic acid, lauric acid or thiols;
the formation of micelles, in a non-polar medium, and the progressive aggregation, growth and formation of nano-particles consisting of the activated complex the surface of which is conjugated with the surfactant molecules;
the dispersion of the nano-particles thus obtained on a support consisting of graphene,
**wherein** the active phase has a Ni/(Pd+Ru) ratio between 1% by weight and 5% by weight and **wherein**
said graphene support consists of a plurality of layers, the thickness of which is less than 1 micron, preferably between 1 nanometer and 10 nanometers.

## Patentansprüche

1. Nanokatalysator für Verfahren zur Hydrierung von pflanzlichen Ölen zur Herstellung von Bioschmierstoffen oder biologisch abbaubaren Kunststoffen zur Herstellung von Copolymeren, **dadurch gekennzeichnet, dass** er aus einer aktiven Phase besteht, die aus Nickel, Palladium und Ruthenium zusammengesetzt ist, welche auf einem Träger dispergiert ist, der aus Graphenschichten mit einer Dicke von weniger als 1 Mikron besteht, **wobei** die Tensidketten, welche die äußere Oberfläche der genannten aktiven Phase bedecken, sterische Hindernisse verursachen, wodurch die selektive Triglycerid-Hydrierung und die Anreicherung des Öls an monoungesättigten cis-Isomeren gefördert wird, **wobei** die aktive Phase ein Ni/(Pd+Ru)-Verhältnis zwischen 1 Gew.-% und 5 Gew.-% aufweist und wobei die genannten Tensidketten Moleküle von Ölsäure, Linolsäure, Stearinsäure, Laurinsäure oder Thiolen sind.

2. Nanokatalysator nach Anspruch 1, **dadurch gekennzeichnet, dass** die Dicke der genannten Graphenschichten zwischen 1 Nanometer und weniger als 1 Mikrometer, vorzugsweise zwischen 1 Nanometer und 10 Nanometer beträgt.

3. Nanokatalysator nach Anspruch 1, **dadurch gekennzeichnet, dass** die aktive Phase ein Ni/(Pd+Ru)-Verhältnis von 2,5 Gew.-% aufweist, **wobei** die Zugabe von Palladium zu Nickel es ermöglicht, die Gesamtaktivität des Katalysators sowohl durch die erhöhte Aktivität des Palladiums als auch durch die Heterogenisierung zwischen den beiden Metallen zu erhöhen, und **wobei** die Anwesenheit von Ruthenium bewirkt, dass eine weitere Heterojunction zwischen den Metallen entsteht, die in der Lage ist, die Umwandlungsreaktion auf die Herstellung von Isomeren mit cis-Konfiguration zu lenken.

4. Katalytisches Verfahren zur Hydrierung von pflanzlichem Öl zur Herstellung von Bioschmierstoffen oder biologisch abbaubaren Kunststoffen zur Herstellung von Copolymeren, **dadurch gekennzeichnet, dass** es unter Verwendung des in einem oder mehreren der vorhergehenden Ansprüche beanspruchten Nanokatalysators durchgeführt wird und **wobei** das Endprodukt aus Fettsäuren mit einem hohen Prozentsatz an cis-9-Octadecensäure (cis-Ölsäure) besteht, um die Bildung von trans-Isomeren der 9-Octadecensäure (trans-Ölsäure) zu verringern.

5. Katalytisches Verfahren zur Hydrierung von pflanzlichem Öl zur Herstellung von Bioschmierstoffen oder biologisch abbaubaren Kunststoffen zur Herstellung von Copolymeren nach Anspruch 3, **wobei** der Katalysator in einem Temperaturbereich zwischen 80°C und 220°C, vorzugsweise bei 100°C, in einem Druckbereich zwischen 1 bar und 30 bar, vorzugsweise bei 10 bar, arbeitet.

6. Verfahren zur Herstellung eines Nanokatalysators nach einem der Ansprüche 1 bis 3, **dadurch gekennzeichnet, dass** es umfasst:
Bilden eines Vorläufers, wobei der Vorläufer aus Nickel, Palladium und Ruthenium zusammengesetzt ist und somit der aktiven Phase entspricht;
Bilden eines aktivierten Komplexes zwischen dem Vorläufer und den Tensidmolekülen, wobei der genannte aktivierte Komplex durch die Wechselwirkung der Metallionen mit dem polaren Kopf des Tensids bestimmt wird und wobei die Tensidmoleküle aus Ölsäure, Linolsäure, Stearinsäure, Laurinsäure oder Thiolen ausgewählt sind;
Bilden von Mizellen in einem apolaren Medium und fortschreitende Aggregation, Wachstum und Bilden von Nanopartikeln, die aus dem aktivierten Komplex bestehen, dessen Oberfläche mit den Tensidmolekülen konjugiert ist;
Dispergieren der auf diese Weise erhaltenen Nanopartikel auf einem aus Graphen bestehenden Träger, **wobei** die aktive Phase ein Ni/(Pd+Ru)-Verhältnis zwischen 1 Gew.-% und 5 Gew.-% umfasst und **wobei** der Graphen-Träger eine Vielzahl von Schichten aufweist, deren Dicke weniger als 1 Mikrometer, vorzugsweise zwischen 1 Nanometer und 10 Nanometer beträgt.

## Revendications

1. Nano-catalyseur pour procédés d'hydrogénation d'huile végétale pour la production de biolubrifiants ou de plastiques biodégradables pour la production de copolymères, **caractérisé en ce qu'il** est constitué par une phase active composée de nickel, palladium et ruthénium, dispersée sur un support se composant de couches de graphène d'épaisseur inférieure à 1 micron, **dans lequel** les chaînes de tensioactifs, qui recouvrent la surface extérieure de ladite phase active, provoquent des entraves stériques favorisant ainsi l'hydrogénation sélective de triglycérides et l'enrichissement d'huile en cis-isomères monoinsaturés, **dans lequel** la phase active présente un rapport Ni/(Pd+Ru) compris entre 1 % en poids et 5 % en poids, et **dans lequel** lesdites chaînes de tensioactifs sont des molécules d'acide oléique, d'acide linoléique, d'acide stéarique, d'acide laurique ou de thiols.

2. Nano-catalyseur selon la revendication 1, **caractérisé en ce que** l'épaisseur desdites couches de graphène est comprise entre 1 nanomètre et moins de 1 micron, de préférence entre 1 nanomètre et 10 nanomètres.

3. Nano-catalyseur selon la revendication 1, **caractérisé en ce que** la phase active présente un rapport Ni/(Pd+Ru) égal à 2,5 % en poids, **dans lequel** l'ajout de palladium au nickel permet d'augmenter l'activité globale de catalyseur en raison à la fois de l'activité supérieure du palladium et de l'hétérogénéisation entre les deux métaux, et **dans lequel** la présence de ruthénium entraîne une hétérojonction supplémentaire entre les métaux, qui permet de décaler la réaction de transformation vers la production d'isomères en configuration cis.

4. Procédé catalytique d'hydrogénation d'huile végétale pour produire des biolubrifiants ou de plastiques biodégradables pour produire des copolymères, **caractérisé en ce qu'**il est réalisé à l'aide du nano-catalyseur revendiqué dans une ou plusieurs des revendications précédentes et **dans lequel** le produit final se compose d'acides gras présentant un pourcentage élevé d'acide cis-9-octadécénoïque *(acide cis-oléique),* afin de réduire la formation d'isomères *trans* d'acide 9-octadécénoïque (acide trans-oléique).

5. Procédé catalytique d'hydrogénation d'huile végétale pour produire des biolubrifiants ou de plastiques biodégradables pour produire des copolymères selon la revendication 3, **dans lequel** ledit catalyseur fonctionne dans une plage de température comprise entre 80°C et 220°C, de préférence à 100°C,
dans une plage de pression entre 1 barg et 30 barg, de préférence à 10 barg.

6. Méthode de production d'un nano-catalyseur selon l'une quelconque des revendications 1 à 3,
**caractérisée en ce qu'**elle comporte :
la formation d'un précurseur, ledit précurseur se composant de nickel, palladium et ruthénium et correspondant ainsi à la phase active ;
la formation d'un complexe activé entre ledit précurseur et les molécules de tensioactif, dans laquelle ledit complexe activé est déterminé par l'interaction des ions métalliques avec la tête polaire du tensioactif, et dans laquelle les molécules de tensioactif sont choisies parmi l'acide oléique, l'acide linoléique, l'acide stéarique, l'acide laurique et les thiols ;
la formation de micelles, dans un milieu non polaire, et l'agrégation, la croissance et la formation progressives de nanoparticules se composant du complexe activé dont la surface est conjuguée aux molécules de tensioactif ;
la dispersion des nanoparticules ainsi obtenues sur un support se composant de graphène,
**dans laquelle** la phase active présente un rapport Ni/(Pd+Ru) compris entre 1 % en poids et 5 % en poids et **dans laquelle**
ledit support en graphène se compose d'une pluralité de couches dont l'épaisseur est inférieure à 1 micron, de préférence comprise entre 1 nanomètre et 10 nanomètres.
